# EUROPEAN PATENT APPLICATION

(11) **EP 1 445 892 A2**
(43) Date of publication of application: **11.08.2004**
(21) Application number: 03300255.1
(22) Date of filing: 09.12.2003
(51) Int. Cl.: H04L 12/22

(54) **Dynamic callback packet filtering gateway**

(30) Priority: 12.12.2002 US 316882
(71) Applicant: Alcatel Canada Inc., Kanata, Ontario K2K 2E6 (CA)
(72) Inventor: MacNamee, Kevin, Ottawa Ontarion K1B 4E8 (CA)
(74) Representative: Feray, Valérie

(57) **Abstract**

A communications traffic acceptance control methods and a Protocol Data Unit (PDU) filtering gateway are presented. The PDU filtering gateway operates in accordance with a group of sentry filtering rules and on accepting PDU traffic. The enhanced PDU filtering gateway selectively generates at run-time additional dynamic filtering rules. Dynamic PDU acceptance control may be enforced on communications traffic in the same and/or the opposite conveyance direction as the first sentry filtering rule triggering PDU. Dynamic PDU acceptance control may also provide time constraint enforcement on traffic acceptance. Advantages are derived from a dynamic PDU acceptance control over connection establishment utilizing reduced resources. New data services may be accommodated via sentry filtering rule specifications providing resilience to equipment obsolescence and minimizing code maintenance overheads.

## Description

### Field of the invention

The invention relates to communications network security, and in particular to methods and apparatus for selectively accepting communication traffic in enforcing control over the establishment of communications connections.

### Background of the invention

Communications services are provisioned between source and destination communications network nodes end-to-end.

A variety of transport protocols are used concurrently to provide communications traffic transport. Typically, the content exchanged between end communications network nodes is segmented into Protocol Data Units (PDUs) in order to benefit from transport bandwidth utilization efficiencies. PDUs generally have an internal structure in accordance with which each segment of content is sandwiched between PDU headers and PDU trailers. The PDU headers and trailers have corresponding: application layer specifiers, communications session specifiers, routing specifiers, switching specifiers, etc. The appending of PDU headers and PDU trailers is known as encapsulation. PDU header information is used to process PDUs in transport at communications network nodes to effect the conveyance thereof in the associated communications network.

Consider, for example the use of the Internet Protocol (IP) as a transport protocol. The IP protocol operates in accordance with an interconnection hierarchy akin to the Open Systems Interconnection (OSI) Hierarchy. Data network nodes typically interconnect at the Physical Layer 1, PDUs are typically switched at the Data Link Layer 2, routing is typically provided at the Network Layer 3, transport control is typically provided by a Transport Control Protocol (TCP) or a User Datagram Protocol (UDP) at Layer 4, end-to-end sessions are typically controlled at Layer 5, data format conversion is typically performed at Layer 6, and applications enabling end user services operate at Layer 7. Electronic content is exchanged end-to-end between applications.

Data segment payloads are assembled into PDUs by passing each payload segment to progressively lower OSI Layers. An increasing amount of session, connection, transport control, routing, switching etc. information is added to the payload segment by encapsulating higher layer PDUs with lower layer PDU headers and trailers. The resulting PDU is then sent over a physical link to a next network node toward a destination end network node. In processing PDUs at intermediary network nodes in the transport path, successive layers of headers are shed (decapsulation) depending on the transport services needed. Once the PDU is processed, it is encapsulated again and sent over another physical link towards another network node in the transport path. PDUs are also used to convey signaling information to effect connectivity end-to-end.

Each network node has a network address. End node network addresses are specified in PDU headers to enable routing and switching of each PDU at transport nodes while in transport. Each electronic service has a unique electronic service code to differentiate between electronic services. Electronic service codes are specified in "Assigned Numbers" Request For Comment (RFC) 1700, or a more recent equivalent, and incorporated herein by reference. Each electronic service makes use of logical connection sockets which are specified in PDU headers as binding points in support of logical communications connections end-to-end. Each electronic service offered makes use of assigned logical communications sockets. Standard logical communications socket number assignments are also specified in the above mentioned "Assigned Numbers" RFC1700, or a more recent equivalent, for standard services. User logical communications socket numbers are also made available to applications on a need-to-use basis. Connectivity for simple electronic services may be achieved using an electronic service code and the corresponding logical socket number(s).

To effect the conveyance of signaling information, various PDU header/trailer specifiers are used to specify signaling flag values. Signaling flags may be conveyed either by special purpose signaling PDUs (typical of connection establishment) or content payload bearing PDUs as specified in the transport protocols used.

The conveyance of communications traffic often involves an interconnected conglomeration of public transport networks such as the Internet. Various portions of the Internet are managed by a corresponding variety of communications network service providers known as carriers. Carriers provide data transport services to customers. Customers include individual users and electronic service providers.

Customers are said to connect at the edge of transport networks via edge communications network equipment. Customer private networks typically make use of shared data transport technologies enabling unfettered exchange of information therewithin. A clash of communications traffic transport requirements exists because customers require interconnectivity over carrier networks while, at the same time, the same customers, require the protection of closely held information. Therefore, in provisioning communications services there is a need to effect control over communications traffic on edge.

Edge communications network equipment includes: bridges, routers, switches, aggregators/deaggregators, firewalls, gateways, etc. each having provider equipment and customer premise equipment varieties. Edge communications network equipment provide(s) severally or in combination a variety of functions including selective data traffic transport across a communications uplink/downlink between a private customer node/network and a public carrier network.

A firewall is a typical edge network node enforcing secure access. A firewall is a filtering gateway (sentry) adapted to sift traffic transported between a public side and a private side thereof. Physical connectivity with a carrier network is made from the public side and physical connectivity with a private customer node/network is made from the private side. Rogue communications network nodes and/or users seeking access from the public side to the private side, must be identified and their access blocked. Bona fide electronic service users accessing electronic services from the public side must be allowed controlled access to the private side. Communications service abusive network nodes and/ or abusive users on the private side must be prevented from monopolizing communications resources. Well behaving communications network nodes and/or conscientious users on the private side must be allowed controlled access to the public side. In performing the sentry role, filtering gateways: monitor communications traffic patterns, determine a measure of adherence to a predefined communications regimen, and enforce control over communications traffic in accordance with the predefined communications regimen.

Prior approaches in effecting communications traffic acceptance selectivity operate either on a per-PDU basis (PDU filtering solutions), or on a per-communication-session basis (session state inspection solutions). The former lends itself to hardware implementation, while the later requires software implementation. Each one of these two differing approaches has benefits and shortcomings, and both have enjoyed an extensive research and application in the field.

Prior art PDU filtering implementations effect PDU acceptance selectivity by operating at the lower layers of the OSI hierarchy. PDU filtering gateways only process information specified in PDU headers below the session layer. PDU filtering gateways are regarded as very efficient in handling data traffic. The efficiency comes from the fact that information about session states is not used in effecting PDU acceptance selectivity. PDU filtering gateways therefore can be implemented in communications network nodes having minimal resources and therefore at minimal costs. PDU filtering implementations are therefore very well adapted to enforce PDU traffic acceptance selectivity in support of electronic service provisioning by operating on known values of a known group of PDU header specifiers. However, not all provisioned electronic service traffic may be controlled effectively by exclusive inspection of PDU headers below the session layer.

Prior art implementations effecting communications traffic acceptance selectivity on a per-communication-session basis, take into account session information derived from PDU headers corresponding to all layers of the OSI hierarchy and perhaps information derived from the PDU payload itself. Acceptance control based on session state inspection benefits from a fine acceptance selectivity enforcement. Such implementations incur comparatively large operational overheads in determining session states, and require large memory storage resources to track session states for a large number of communications sessions. Some implementations go as far as employing electronic service proxies which interpret conveyed PDUs in their entirety to extract session state information.

PDU filtering gateways typically employ hardcoded firmware and/ or hardware enabling the inspection of PDU headers. For simple electronic services only a service code and two corresponding logical sockets are needed to be known to a particular PDU filtering gateway to effect full traffic acceptance control. For complex electronic services very little control may be effected based only on this information.

Problems with the above mentioned implementations may perhaps be best described via an example. Although a variety of electronic services exist, the FTP service is a most representative service to be supported. FTP stands for File Transfer Protocol - name which refers both to an actual file transfer protocol operating at OSI Layers 4-5-6, and also refers to an application operating at OSI Layer 7. The use of the FTP service is widespread from communications network node configuration management to Internet content downloading. A description of the FTP protocol is provided in RFC959 which is incorporated herein by reference. For the FTP service, a single electronic service code is defined.

An FTP session involves the use of multiple communication connections. The FTP protocol specifies the use of at least one control channel and at least one data channel to effect transfer of electronic content between communications network nodes. A default logical socket is defined for the control channel connection, and multiple varying logical socket numbers may be used, as required at run-time, for dynamically established data channel connections.

From a point of view of a particular edge communications network node, FTP services are initiated by establishing at least one control channel while the at lest one data channel typically does, but does not necessarily need to, involve the particular edge communications network node. The following represent exemplary FTP scenarios:
- the transfer of a file across the edge communications network node: both the control channel and the data channel(s) are established via the edge communications network node;
- the transfer of multiple files between two network nodes across the edge communications network node using a data channel and multiple data channels for transferring the files (not necessarily a one-to-one correspondence between the multiple files to be transferred and the number of data channel connections used);
- a user from a network node on one side of the edge communications network node needs to synchronize two content servers on the other side: a control channel needs to be established to each content server via the edge communications network node, while the data connection is established between the content servers not involving the edge communications network node at all; and
- a user from a network node on one side of the edge communications network node needs to synchronize two content servers one of which is on the private side and the other on the public side: a control channel needs to be established between the user's network node and the server on the opposite side of the edge network node, while the data connection(s) is/ are established between the servers - all connections need involve the edge network node.

A characteristic of the FTP service is that connections, especially the data channel connections, are established dynamically, the particular FTP session associations of which may be determined only by inspection of Layer 7 information.

The use of multiple varying logical socket numbers in FTP service provisioning enables only the provisioning of rudimentary PDU filtering, which may only be based on the FTP service code, characterized by either full blocking of all FTP traffic or acceptance of all traffic purporting to be FTP traffic. Full blocking of FTP traffic is detrimental to the provision of this ubiquitous electronic service, while unrestricted access of all FTP traffic defeats the purpose of acceptance control enforcement especially considering that FTP traffic is bandwidth intensive.

Further, the hardware/firmware coding of PDU filtering gateway devices leads to equipment obsolescence as new electronic services are developed and deployed.

The information needed to determine what communication socket need be opened for each data channel is conveyed in the control channel.

In accordance with the prior art, in order to implement dynamic control over the data channels, the filtering gateway must inspect the payloads of the FTP PDUs exchanged over the control channel to determine session states. While incurring high processing overheads in performing session state inspection, session state inspection gateways can enforce enhanced traffic acceptance control for supported electronic services.

Electronic service developers do not necessarily code corresponding session state inspection gateways. Session state inspection gateways are coded by third parties. An exposure to session state inspection solution obsolescence exists as electronic service development and deployment is always ahead of session state inspection gateway development and deployment. Software solution coding used to implement the session state inspection gateways itself suffers from a high development and maintenance overhead to address solution obsolescence.

Coding efforts in developing and deploying software session state inspection gateways are subject to coding errors. Errors in session state inspection gateway application code impacts the ability to provision electronic services. Furthermore, the session state inspection overhead leads to a reduction in PDU transfer throughput across the session state inspection gateway when compared to the PDU filtering gateways.

Some communication services provisioning environments cannot justify employing session state inspection gateways while prior art hardcoded PDU filtering techniques are inadequate to provide traffic acceptance control for ubiquitous electronic services such as FTP.

There therefore is a need to provide filtering gateways and methods addressing the above mentioned problems.

### Summary of the invention

In accordance with an aspect of the invention, a Protocol Data Unit (PDU) filtering gateway is provided. A sentry rule storage holds a plurality of sentry filtering rules. A dynamic rule storage holds a plurality of dynamic filtering rules. An extractor inspects a received PDU received via one of a private port and a public port and uses extracted PDU information to formulate a PDU acceptance query. A comparator subjects the PDU acceptance query to a combination of dynamic filtering rules and sentry filtering rules. And, a forwarder selectively accepts the PDU based on results of processing the PDU acceptance query. Each sentry filtering rule is specified for a PDU conveyance direction of an allowed connection establishment. A rule match between the PDU acceptance query corresponding to a SYN PDU, and a sentry filtering rule, generates at least one dynamic filtering rule for allowing conveyance of subsequent PDUs across the PDU filtering gateway bidirectionally, otherwise the conveyance of PDUs in the opposite direction being prevented.

In accordance with another aspect of the invention, each dynamic filtering rule specification includes: an origination network node address specifier, a destination network node address specifier, an origination logical socket range specifier, and a destination logical socket range specifier. A rule match between the PDU acceptance query corresponding to a SYN PDU, and a sentry filtering rule, generates at least one dynamic filtering rule. The dynamic filtering rule selectively allows conveyance of subsequent PDUs, across the PDU filtering gateway, for a plurality of connections using at least one origination logical socket in the origination logical socket range and at least one destination logical socket in the destination logical socket range thereby enabling support for dynamic callback services. Otherwise the conveyance of the subsequent PDUs is prevented.

In accordance with a further aspect of the invention, a method of filtering Payload Date Units (PDUs) in a PDU filtering gateway is provided. A PDU acceptance query is formed based on PDU information extracted from a received PDU. The PDU acceptance query is subjected to at least one sentry filtering rule. At least one dynamic filtering rule is selectively generated if the PDU acceptance query corresponds to a SYN PDU, and the PDU acceptance query matches a sentry filtering rule. The received PDU is selectively accepted based on results of processing the PDU acceptance query. With each sentry filtering rule being specified for a PDU conveyance direction of an allowed connection establishment, the at least one generated dynamic filtering rule selectively allows the conveyance of subsequent PDUs associated with the established connection, across the PDU filtering gateway, bidirectionally. Otherwise the conveyance of PDUs in the opposite direction is prevented.

In accordance with yet another aspect of the invention, in generating a dynamic filtering rule, the method includes further steps. An origination network address specifier of the generated dynamic filtering rule is populated with a first specific network address extracted from a received PDU. A destination network address specifier of the generated dynamic filtering rule is populated with a second specific network address extracted from the received PDU. An origination logical socket range specifier of the generated dynamic filtering rule is populated with at least one origination logical socket value corresponding to an allowed electronic service specification extracted from the PDU. And, a destination logical socket range specifier of the generated dynamic filtering rule is populated with at least one destination logical socket value corresponding to the allowed electronic service specification extracted from the PDU. Populating the origination and destination logical socket range specifiers with specific destination logical socket values, enables controlled selective acceptance of PDUs associated with at least one additional connection having the same allowed electronic service specification, between the first and second network addresses thereby providing support for dynamic callback services.

The advantages are derived from a run-time configurable, dynamic time-sensitive traffic acceptance control at reduced implementation costs. A variety of data services may be accommodated providing a resistance to obsolescence for communications network equipment implementing these techniques.

### Brief description of the drawings

The features and advantages of the invention will become more apparent from the following detailed description of the preferred embodiments with reference to the attached diagrams wherein:

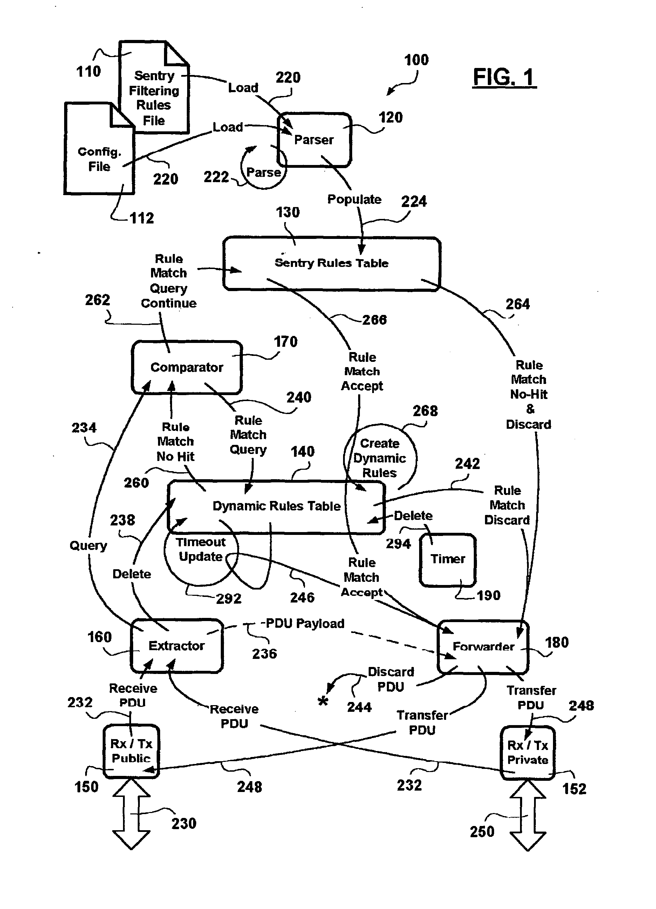

FIG. 1 is a schematic diagram showing cooperating elements implementing an exemplary PDU filtering gateway and process steps implementing communications traffic acceptance selectivity in accordance with an exemplary embodiment of the invention

It will be noted that in the attached diagram like features bear similar labels.

### Detailed description of the embodiments

The operation of the File Transfer Protocol (FTP) service is exemplary of what is known as dynamic callback functionality. For certainty, the establishment of the control channel connection may lead to the establishment of other related connections including a multitude of data channel connections.

In accordance with an exemplary embodiment of the invention, support for dynamic callback functionality is implemented in an improved PDU filtering gateway.

In accordance with the exemplary embodiment of the invention, a dynamic callback filtering provides a simple mechanism for a PDU filtering gateway to support electronic services that dynamically open connections without requiring session state inspection (application layer information) of PDUs and storage of communications session state information. PDU filtering gateways are coded with the ability to: detect connection establishment signaling, determine connectivity states, and enforce access control over logical communications sockets.

Connection state determination involves tracking signaling information conveyed typically in OSI Layer 4 headers specified by the exemplary use of the Transport Control Protocol (TCP), and the User Datagram Protocol (UDP) transfer protocols.

In accordance with the exemplary embodiment of the invention, the degree to which connectivity state tracking is performed enables the determination of connection establishment and teardown.

Typically, each communications connection is established via signaling sequences known as handshakes. To establish a bi-directional TCP/IP connection, a three-way handshake is used:
- A connection originator node first sends a synchronization request via a SYN PDU to an intended destination network node to establish a unidirectional connection;
- The destination network node acknowledges the establishment of the originating unidirectional connection and proceeds to request establishment of the second unidirectional connection from the destination node to the originator node by sending back an acknowledgement and synchronization request: SYN/ ACK PDU; and
- The originator node acknowledges the establishment of the second unidirectional connection, via an ACK PDU, to complete the bi-directional connection.

Tearing down of established TCP/IP connections can be initiated by any one end network node. Connection teardown typically involves sending a connection reset request (RST PDU) or a finish announcement (FIN PDU). Other signals my be used without departing from the spirit of the invention.

In employing the UDP protocol, successful transport of a first PDU between an originator network node and a destination network node is representative of a unidirectional connection existing between the network nodes.

In accordance with the exemplary embodiment of the invention, an improved dynamic callback PDU filtering gateway is provided with the ability to effect traffic acceptance in accordance with callback filtering rules. Each callback filtering rule states inter alia that, if a connection is established through the dynamic callback PDU filtering gateway between two end nodes, then at least one connection will be allowed to be established between the same two end nodes using at least one of a specific group of sockets (within a specific period of time). Therefore, improved traffic acceptance control for dynamic callback electronic services may be supported using PDU filtering techniques.

In accordance with the exemplary implementation, enhanced support for dynamic callback filtering is provided to effect traffic acceptance in accordance with sentry filtering rules. Each sentry filtering rule states inter alia, that if a PDU requesting the establishment of a communication connection matches the conditions of a session PDU filtering rule in a particular PDU transport direction across the exemplary dynamic callback PDU filtering gateway, electronic service specific traffic flow in the opposite transport direction is to be allowed thereafter, and not before, between the specific destination and origination network addresses. Sentry filtering rules have a directional specification related to the acceptance of PDU traffic across the dynamic callback PDU filtering gateway: private -> public / public -> private. As will be shown herein below, the sentry rules may have a unidirectional or a bi-directional effect once triggered.

Each sentry PDU filtering rule includes the following specifiers:
- an Origination Network Address Range;
- a Destination Network Address Range;
- a Protocol;
- an Origination Logical Socket Range;
- a Destination Logical Socket Range;
- a rule Type; and
- (Timeout).

Network Address Ranges may include: one network address, a subnet address, at least one wild card, address range mnemonics, etc. Address range mnemonics include:
- ANY - referring to any network address;
- MAP - referring to any network address specified in an associated list;
- VPN - referring to network addresses of nodes participating in a Virtual Private Network (VPN);
- PRIVATE - referring to any network address on the private side; and
- PUBLIC - referring to any network address on the public side.
   An Address Range mnemonic definition facility may be provided. An address MAP definition facility may also be provided.

The Protocol specifier may hold supported service code values specified in the above mentioned "Assigned Numbers" RFC1700, or a more recent equivalent, as well as supported service code mnemonics including:
- ANY - referring to any service code regardless of support thereof;
- ALL - referring to all supported service codes; and
- "specific electronic service mnemonics": FTP, TCP, UDP, ICMP (Internet Control Message Protocol), etc.

A facility may be provided for the definition of protocol specification mnemonics reducing solution obsolescence. Another facility may be provided for the definition of SMAP(s).

The Logical Socket Ranges specifiers hold the logical connection socket ranges associated with the origination and destination of traffic, respectively. The Socket Range specifiers may be populated with logical socket values specified in the above mentioned "Assigned Numbers" RFC1700, or a more recent equivalent, as well with supported service code mnemonics including:
- ANY - referring to any service code regardless of support thereof;
- ALL - referring to all supported service codes; and
- "specific electronic service mnemonics": FTP, TCP, UDP, ICMP, etc.

A facility may be provided for the definition of logical socket specification mnemonics preventing solution obsolescence.

The Type specifier indicates how the rule should be interpreted. Exemplary valid types include:
- ALLOW - enables unhindered unidirectional transfer of inspected rule triggering PDUs across the enhanced PDU filtering gateway with very little processing overhead;
- DENY - blocks unidirectional transfer of triggering PDUs with very little processing overhead;
- CONNECTION - specifies control over bi-directional traffic when an allowed connection is initiated in the direction specified in the sentry filtering rule: PDU traffic is not accepted in the opposite direction until the connection is initiated, and PDU traffic is not accepted in the opposite direction after the connection has been terminated; and
- CALLBACK - specifies control over bi-directional traffic for multiple (related) connections in support of dynamic callback electronic services: once a connection is established, as exemplary described in the paragraph above, additional connections are permitted to be established between the network nodes of the initial connection.

In referring to FIG. 1 exemplary elements will are labeled with 100-series labels while exemplary process steps will be labeled with 200-series labels.

In accordance with the exemplary embodiment of the invention, sentry filtering rules are specified via a human readable sentry filtering rules file 110. The use of the human readable sentry filtering rules file 110 provides support for the configuration of the exemplary dynamic callback PDU filtering gateway 100. Support for additional electronic services may be provided via additional configuration specified via additional sentry filtering rules. The sentry filtering rules file 110 is loaded 220, parsed 222 by a parser 120, and the specified traffic acceptance regiment is stored 224 in retrievable storage 130 for subsequent access. The retrievable storage 130 may include, but is not limited to, a sentry rule table 130.

Certain directives, specified via a configuration (or definitions) file 112, may be used to effect the definition of the various mnemonics and Map(s) mentioned above. A command may be issued to the dynamic callback PDU filtering gateway 100 to store a current PDU acceptance discipline in a sentry filtering rules file 110, as well another command may by issued to store the current configuration of the dynamic callback PDU filtering gateway 100 in the configurations file 112.

The sentry filtering rules are intended to have a governing effect on the PDU acceptance discipline, and as presented herein above, preferably describe the traffic acceptance regimen generically. For example, the use of Network Address mnemonics helps in defining a compact acceptance discipline.

Generally, ALLOW sentry filtering rules are specified in corresponding pairs to enable bi-directional transfer of PDUs. The ALLOW and DENY sentry filtering rule types enable backward compatibility with prior art PDU filtering functionality. Once triggered, the ALLOW and DENY sentry filtering rules cause the specification and activation of corresponding dynamic filtering rules enabling traffic acceptance enforcement in the transport direction of the triggering PDU.

Directional CONNECTION and CALLBACK sentry filtering rules, when triggered, generate additional dynamic filtering rules enabling associated traffic acceptance enforcement in the same and/or opposite transport direction as that of the triggering PDU. Dynamic filtering rules created on triggering CONNECTION and CALLBACK sentry filtering rues are removed when connections terminate.

Dynamic filtering rules are intended to effect specific PDU acceptance selectivity. The dynamic filtering rules may have a format similar to the sentry filtering rule format presented above and stored in a dynamic rules table 140. In accordance with the exemplary embodiment of the invention, the specification of the dynamic filtering rules differs from the specification of the sentry filtering rules in:
- The Origination and Destination Network Node Address specifiers are populated with specific end network node addresses;
- The Protocol specifier is populated with the specific protocol value corresponding to the triggering PDU;
- The Origination and Destination Logical Socket Ranges are populated with the specific logical socket values associated with the service code corresponding to the triggering PDU; and
- The rule Type is preferably either ALLOW or DENY although the CONNECTION Type may be used to specify dynamic filtering rules more compactly.

For example, in providing traffic acceptance control support for web content delivery services, user network nodes from the public side are to be given access to a web content server network node having a network address WebServerADDR on the private side. The following exemplary sentry filtering rule:
PUBLIC, WebServerADDR, TCP, ANY, HTTP, CONNECTION
enables the user from the public side to establish a communication session with the web server located on the private side.

In establishing a web browsing connection, a user network node sends a SYN PDU bearing: a UserNodeAddress, the WebServerADDR, the HyperText Transfer Protocol (HTTP) service code, and connection socket specifications. The SYN PDU is conveyed 230 towards the dynamic callback PDU filtering gateway 100.

The SYN PDU is received 232 via the public physical port 150 of the dynamic callback PDU filtering gateway 100 and provided to an extractor block 160. The extractor block 160 monitors communications traffic patterns by extracting header specifier values. The extractor block 160 forms a PDU acceptance query 234, and submits the query 234 to a comparator block 170.

The comparator block 170 determines a measure of adherence to the predefined communications regimen specified in the sentry rules table 130 and the dynamic rules table 140. The comparator block 170 performs a rule match query 240 on the dynamic filtering rules in the dynamic rules table 140 using the header information extracted from the PDU.

The rule match query 240 may result in a rule match which specifies discarding the PDU. The PDU drop result 242 is conveyed to a forwarder block 180 which discards the PDU 244. The PDU including its payload is available 236 form the extractor block 160 via methods and techniques beyond the scope of the present description without limiting the invention.

The rule match query 240 may result in a rule match which specifies the acceptance of the PDU. The PDU accept result 246 is provided to the forwarder block 180. The forwarder block 180 transfers 248 the PDU across the dynamic callback PDU filtering gateway 100 and causes its forwarding over the private port 152. Ultimately the accepted PDU is transported 250 over the private network to the web content server.

If the received PDU is a SYN PDU, it is likely that the rule match query 240 performed on the dynamic rules table 140 will result in a non-hit event which is expected as the SYN PDU is the first PDU of the exemplary new web browsing connection. The rule match non-hit event is notified 260 to the comparator block 170.

The comparator block 170 performs a continued rule match query 262 on the sentry filtering rules in the sentry rules table 130 using the header information extracted from the PDU.

The continued rule match query 262 may result in a rule match which specifies discarding the PDU. The PDU drop result 264 is conveyed to the forwarder block 180 which discards the PDU 244.

The continued rule match query 262 may result in a rule match which specifies the acceptance of the PDU. The PDU accept result 266 is provided to the forwarder block 180. As an intended side effect, at least one dynamic filtering rule is created 268 and stored in the dynamic rules table 140. The forwarder block 180 transfers 248 the PDU across the dynamic callback PDU filtering gateway 100 and causes its forwarding over the private port 152. Ultimately the accepted PDU is transported 250 over the private network to the web content server.

In accordance with the example, the processing of the SYN PDU results in the creation 268 of the following unidirectional dynamic filtering rules to allow the PDU transfers across the dynamic callback PDU filtering gateway 100 for a single bi-directional connection:
UserNodeADDR, ServerADDR, TCP, userSocketOut, HTTP, ALLOW; and
ServerADDR, UserNodeADDR, TCP, HTTP, userSocketIn, ALLOW.

Should the extractor 160 process an RST PDU or a FIN PDU for the web browsing connection, the extractor 160 causes the deletion 238 of the corresponding dynamic filtering rules.

The generated dynamic filtering rules correspond to rules that would need to be setup for simple PDU filtering. The enhancement comes from the fact that before the SYN PDU is received no connections are allowed in the opposite transport direction of the SYN PDU whatsoever. Nor are connections allowed in the opposite direction after connection termination representing a further security access enhancement.

The storage 224 of the sentry filtering rules in the retrievable storage 130 may be subject to a storage sequence akin to the order in which the sentry filtering rules were specified in the filtering rules file 110. Sentry rules may be triggered on a first-matched basis. Non-trigger instances 264 lead to discarding the subject PDU. Non-trigger events 260 in inspecting the dynamic rules table 140 simply cause the inspection of the sentry rules table 130.

In accordance with the specification of the FTP protocol the control channel employs a TCP connection. The following exemplary filtering rule would enable users on the private side to access any FTP servers on the public side:
PRIVATE, PUBLIC, TCP, ANY, FTP, CALLBACK, ALLOW.

A received FTP SYN PDU matching the filtering rule will trigger the dynamic callback PDU filtering gateway 100 to generate a pair of ALLOW dynamic filtering rules for accessing a particular FTP server having a node address FTPserverADDR:
UserNodeADDR, FTPserverADDR, TCP, ClientControlSocket, ServerControlSocket ;
FTPserverADDR, UserNodeADDR, TCP, ServerControlSocket, ClientControlSocket ; for the control channel connection. In order to provide support for the dynamic callback functionality of the FTP protocol a range of logical sockets A to N are made available to be used for FTP services. As soon as the control channel connection is established, the following ALLOW dynamic filtering rule is added 268 to the dynamic rules table 140:
FTPserverADDR, UserNodeADDR, TCP, 1024-65535,1024-65535, CONNECTION.

This allows the FTP server to request establishment of data channel connections back to the UserNodeADDR using user logical sockets in the FTP allowed range of logical sockets. As each data channel connection is established, specific ALLOW rules are generated 268:
UserNodeADDR, FTPserverADDR, TCP, UserSocketA, FTPsocketA, ALLOW;
FTPserverADDR, UserNodeADDR, TCP, FTPsocketA, UserSocketA, ALLOW;
UserNodeADDR, FTPserverADDR, TCP, UserSocketB, FTPsocketB, ALLOW;
FTPserverADDR, UserNodeADDR, TCP, FTPsocketB, UserSocketB, ALLOW; (etc.)

The entire range of logical sockets may or may not actually be used. The receipt and transfer of an RST or a FIN PDU in relation to the control channel connection causes the deletion 238 of all dynamic filtering rules for the FTP service between the UserNodeADDR and the FTPserverADDR.

The exemplary functionality presented enables PDU filtering gateways to support dynamic callback functionality at reduced costs compared to session state inspection gateways.

As the sentry filtering rules specified to have a governing effect on PDU traffic acceptance are inspected, and interpreted only once at connection establishment, the use of dynamic filtering rules having a specific effect on each connection provides a reduction in processing overheads.

Such implementations may also be shown to utilize comparatively less resources when compared to session state inspection filtering techniques. With careful design a dynamic filtering rule may be expressed in 32bytes, or less, enabling tens of thousands of connections to be established and processed on relatively modest equipment.

Therefore, without tracking communications session states, further traffic acceptance control may be enforced by a configurable control over the use of logical communications sockets.

In relation to the provision of FTP services the need to examine control channel PDU payloads is reduced and may ultimately be eliminated dependent on which FTP scenarios are to be supported by a particular implementation.

A security hole exists in enabling access to a range of logical sockets. Otherwise unauthorized access is given to other applications purporting to be FTP applications using the allowed logical socket associations to establish communication sessions between the communicating network nodes. A closer control may of course be provided by session state inspection of PDUs at excessive implementation and maintenance costs.

In accordance with the exemplary embodiment of the invention, the exposure to the security hole is be minimized by timing-out the dynamic filtering rules.

The Timeout specifier is used to set time constraints within which establishment of allowed connections is expected. Values used may be based on the Protocol and/or Type specifiers. A 0 (zero) value is used to indicate no timeout. If not specified, a default timeout may be used.

For example, each dynamic filtering rule is timed out independently and deleted if not used:
UserNodeADDR, FTPserverADDR, TCP, UserSocketA, FTPsocketA, ALLOW, 5min ;
FTPserverADDR, UserNodeADDR, TCP, FTPsocketA, UserSocketA, ALLOW, 5min ;
UserNodeADDR, FTPserverADDR, TCP, UserSocketB, FTPsocketB, ALLOW, 5min ;
FTPserverADDR, UserNodeADDR, TCP, FTPsocketB, UserSocketB, ALLOW, 5min ;
...
UserNodeADDR, FTPserverADDR, TCP, UserSocketN, FTPsocketN, ALLOW, 5min ;
FTPserverADDR, UserNodeADDR, TCP, FTPsocketN, UserSocketN, ALLOW, 5min.

The Timeout values are decremented at regular intervals by a timer module 190. Subsequently received PDUs matching the dynamic filtering rules update 292 respective Timeout values. If no PDUs are received by the dynamic callback PDU filtering gateway within the time period specified in the Timeout specifier then, the corresponding dynamic filtering rule is deleted 294 (for example on decrementing the Timeout value to 1).

The direction of PDU transport across the PDU filtering gateway is symmetric except for the case in which the PDU filtering gateway also supports processing of encrypted traffic, then only decrypted PDUs are subjected to the communications traffic acceptance discipline.

The embodiments presented are exemplary only and persons skilled in the art would appreciate that variations to the above described embodiments may be made without departing from the spirit of the invention. The scope of the invention is solely defined by the appended claims.

## Claims

1. A Protocol Data Unit (PDU) filtering gateway comprising:
**a.** a sentry rule storage holding a plurality of sentry filtering rules;
**b.** a dynamic rule storage holding a plurality of dynamic filtering rules;
**c.** an extractor inspecting a received PDU received via a one of a private port and a public port, the extractor using extracted PDU information to formulate a PDU acceptance query;
**d.** a comparator subjecting the PDU acceptance query to a combination of dynamic filtering rules and sentry filtering rules; and
**e.** a forwarder selectively accepting the PDU based on results of processing the PDU acceptance query;
each sentry filtering rule being specified for a PDU conveyance direction of an allowed connection establishment, a rule match between the PDU acceptance query corresponding to a SYN PDU and a sentry filtering rule generates at least one dynamic filtering rule for allowing conveyance of subsequent PDUs across the PDU filtering gateway bidirectionally, otherwise the conveyance of PDUs in the opposite direction being prevented.

2. A PDU filtering gateway as claimed in claim 1, wherein each sentry filtering rule specification comprises:
**a.** an origination network node address range specifier;
**b.** a destination network node address range specifier;
**c.** an origination logical socket range specifier; and
**d.** a destination logical socket range specifier; the sentry filtering rule enabling support for dynamic callback functionality.

3. A PDU filtering gateway a claimed in claim 2, wherein the sentry filtering rule further comprises a timeout specifier.

4. A PDU filtering gateway a claimed in claim 2, wherein the sentry filtering rule further comprises a protocol specifier.

5. A PDU filtering gateway a claimed in claim 2, wherein the sentry filtering rule further comprises a rule type specifier.

6. A PDU filtering gateway as claimed in claim 1, wherein each dynamic filtering rule specification comprises:
**a.** an origination network node address specifier;
**b.** a destination network node address specifier;
**c.** an origination logical socket range specifier; and
**d.** a destination logical socket range specifier;
a rule match between the PDU acceptance query corresponding to a SYN PDU and a sentry filtering rule generates at least one dynamic filtering rule selectively allowing conveyance of subsequent PDUs across the PDU filtering gateway for a plurality of connections using at least one origination logical socket in the origination logical socket range and at least one destination logical socket in the destination logical socket range enabling support for dynamic callback services, otherwise the conveyance of said subsequent PDUs being prevented.

7. A PDU filtering gateway a claimed in claim 3, wherein the dynamic filtering rule further comprises a timeout specifier used to discard a dynamic filtering rule if no PDU traffic triggering the dynamic filtering rule has been received for a time duration specified via the timeout specifier.

8. A PDU filtering gateway a claimed in claim 3, wherein the dynamic filtering rule further comprises a protocol specifier.

9. A PDU filtering gateway a claimed in claim 3, wherein the dynamic filtering rule further comprises a rule type specifier.

10. A PDU filtering gateway as claimed in claim 7, further comprising a timer for discarding a dynamic filtering rule if PDU traffic controlled by the dynamic filtering rule has not been received of a time period longer than a timeout value specified with respect to the dynamic filtering rule.

11. A PDU filtering gateway as claimed in claim 1, further comprising a parser for parsing one of a sentry rule file and a configuration file.

12. A PDU filtering gateway as claimed in claim 1, further comprising a control interface for specifying sentry filtering rules.

13. A method of filtering Payload Date Units (PDUs) in a PDU filtering gateway comprising steps of:
**a.** forming a PDU acceptance query based on PDU information extracted from a received PDU;
**b.** subjecting the PDU acceptance query to at least one sentry filtering rule;
**c.** selectively generating at least one dynamic filtering rule if the PDU acceptance query corresponds to a SYN PDU and the PDU acceptance query matches a sentry filtering rule;
**d.** selectively accepting the received PDU based on results of processing the PDU acceptance query;
with each sentry filtering rule being specified for a PDU conveyance direction of an allowed connection establishment, the at least one generated dynamic filtering rule selectively allowing the conveyance of subsequent PDUs associated with the established connection across the PDU filtering gateway bidirectionally, otherwise preventing the conveyance of PDUs in the opposite direction.

14. A method of filtering PDUs as claimed in claim 13, further comprising a step of: discarding a dynamic filtering rule if one of a FIN PDU and a RST PDU matching the dynamic filtering rule is received, discarding the dynamic filtering rule ensures that selective acceptance of PDUs is restricted to a time period during which the connection corresponding to the dynamic filtering rule is in use.

15. A method of filtering PDUs as claimed in claim 13, wherein generating a dynamic filtering rule, the method further comprises steps of:
**a.** populating an origination network address specifier of the generated dynamic filtering rule with a first specific network address extracted from the received PDU;
**b.** populating a destination network address specifier of the generated dynamic filtering rule with a second specific network address extracted from the received PDU;
**c.** populating an origination logical socket range specifier of the generated dynamic filtering rule with at least one origination logical socket value corresponding to an allowed electronic service specification extracted from the PDU; and
**d.** populating a destination logical socket range specifier of the generated dynamic filtering rule with at least one destination logical socket value corresponding to the allowed electronic service specification extracted from the PDU;
populating the origination and destination logical socket range specifiers with specific destination logical socket values, enables controlled selective acceptance of PDUs associated with at least one additional connection having the same allowed electronic service specification between the first and second network addresses thereby providing support for dynamic callback services.

16. A method of filtering PDUs as claimed in claim 13, wherein generating a dynamic filtering rule, the method further comprises step of: populating a timeout specifier with a timeout value defining a maximum dynamic rule triggering time period.

17. A method of filtering PDUs as claimed in claim 16, wherein, if the dynamic filtering rule is triggered during the triggering time period, the method further comprises a step of: restarting the beginning of a new triggering time period.

18. A method of filtering PDUs as claimed in claim 16, further comprising a step of: discarding the dynamic filtering rule if a period of time greater than the triggering time period has passed without a triggering instance.

19. A method of filtering PDUs as claimed in claim 13, further comprising a step of: specifying a sentry filtering rule via an interface.

20. A method of filtering PDUs as claimed in claim 19, further comprising a step of: storing the sentry filtering rule to a sentry rule file.

21. A method of filtering PDUs as claimed in claim 20, further comprising a steps of:
**a.** loading a sentry rule file;
**b.** parsing the sentry rule file; and
**c.** retrievably storing sentry filtering rules specified in the sentry rule file to enable PDU acceptance query processing.

22. A method of filtering PDUs as claimed in claim 13, further comprising a step of: specifying a configuration via an interface.

23. A method of filtering PDUs as claimed in claim 22, further comprising a step of: storing the configuration to a configuration file.

24. A method of filtering PDUs as claimed in claim 23, further comprising a steps of:
**a.** loading a configuration file;
**b.** parsing the configuration file; and
**c.** configuring the PDU filtering gateway in accordance with configurations specified in the configuration file.
